# EUROPÄISCHE PATENTANMELDUNG

(11) **EP 1 874 071 A1**
(43) Veröffentlichungstag der Anmeldung: **02.01.2008**
(21) Anmeldenummer: 06013609.0
(22) Anmeldetag: 30.06.2006
(51) Int. Cl.: H04Q 7/38

(54) **Verfahren zum Bereitstellen von Daten über einen Pilotkanal eines Funk-Kommunikationssystems**

(71) Anmelder: NOKIA SIEMENS NETWORKS GMBH & CO. KG, 81541 München (DE)
(72) Erfinder: Falk, Rainer, Dr., 85386 Eching (DE); Luo, Jijun, 80797 München (DE); Mohyeldin, Eiman Bushra, 81476 München (DE); Schulz, Egon, Dr., 80993 München (DE)

(57) **Zusammenfassung**

Die Erfindung bezieht sich auf ein Verfahren zum Bereitstellen von ersten Daten (i) über einen Pilotkanal (CPC) eines Funk-Kommunikationssystems (GSM), bei dem der Pilotkanal (CPC) mit den Daten (i) Informationsdaten zu verfügbaren Zugriffsmöglichkeiten aussendet. Gekennzeichnet ist das Verfahren dadurch, dass zum Bereitstellen der ersten Daten (i) von zumindest einem Endgerät (MS, MS*) empfangene zweite Daten (mi) verwendet werden, wobei sich die zweiten Daten (mi) auf für das zumindest eine Endgerät (MS, MS*) verfügbare Zugriffsmöglichkeiten beziehen.

## Beschreibung

Die Erfindung bezieht sich auf ein Verfahren zum Bereitstellen von Daten über einen Pilotkanal eines Funk-Kommunikationssystems, insbesondere eines Mobilfunksystems, sowie auf Komponenten eines solchen Funk-Kommunikationssystems zum Durchführen des Verfahrens.

Eine stetig steigende Anzahl unterschiedlicher Funk-Kommunikationssysteme, beispielhaft seien nur die Systeme nach den bekannten Standards GSM, IS-95, UMTS, CDMA2000, WLAN, WiMAX genannt, führt dazu, dass Endgeräte als Teilnehmerendgeräte eine immer größere Anzahl dieser Systeme bzw. Standards unterstützen. Dadurch wird dem ein solches Endgerät nutzenden Teilnehmer ein Zugang zu Kommunikationsnetzen in vielfältigster Weise ermöglicht. Zudem gehen Betreiber von Funk-Kommunikationssystemen zunehmend dazu über, Systeme unterschiedlicher Standards ihren Kunden zur Verfügung zu stellen, wobei die Möglichkeit geboten wird, zwischen diesen unterschiedlichen Systemen zu roamen.

All dies kann jedoch nachteilig dazu führen, dass auf Grund der großen Auswahl verfügbarer Systeme, die zudem in der Regel in unterschiedlichen systemspezifischen Frequenzbändern arbeiten oder in sonstiger Weise auf physikalisch unterschiedliche Ressourcen zugreifen, der Zeitraum für einen Aufbau einer Verbindung durch ein Endgerät verlängert wird. Möchte ein Teilnehmer mit seinem Endgerät beispielsweise einen hochdatenratigen Dienst nutzen, beispielhaft sei Videostreaming genannt, so kann ein derartiger Dienst potenziell von unterschiedlichen Systemen zur Verfügung gestellt werden. Sofern seitens des Teilnehmers bzw. seines Endgerätes kein spezifisches System vorausgewählt wurde, erfolgt seitens des Endgerätes während des Aufbaus der Verbindung eine Kontaktaufnahme zu verschiedenen Systemen. Das Endgerät versucht dabei bevorzugt, zunächst Signale von verschiedenen Systemen, beispielsweise Systemen des gleichen Betreibers, zu empfangen, und anschließend ein für den gewählten Dienst geeignetes System auszuwählen.

Insbesondere wenn das Endgerät an einem Ort in Betrieb genommen wird, an dem es zuvor keinerlei Verbindung zu einem System unterhalten hat und somit nicht auf Erfahrungswerte zurückgreifen kann, beispielsweise wenn sich der Teilnehmer mit seinem Endgerät nach einem Flug im Ausland befindet, kommt zudem gegebenenfalls erschwerend bzw. die Zugriffszeit verlängernd hinzu, dass nicht bekannt ist, mit welchem lokalen Betreiber der heimatliche Betreiber ein so genanntes Roaming-abkommen geschlossen hat, um Kunden erniedrigte Verbindungsgebühren zu ermöglichen. In diesem Fall wird dem Teilnehmer gegebenenfalls mehrmals ein lokales System bzw. ein lokaler Betreiber vorgeschlagen, zu welchem der Teilnehmer dann entscheiden muss, ob ein Verbindungsaufbau erfolgen soll oder nicht.

Um die wachsende Anzahl von Systemen bzw. Zugangsmöglichkeiten für Teilnehmer bzw. deren Endgeräte übersichtlich zu gestalten, wurde u. a. in dem Dokument "Global Pilot Mechanism", Tdoc SMG2 UMTS 52/97, ETSI STC SMG2 UMTS adhoc, 8.-10. April 1997, Lulea, Schweden, S.1 und 2, vorgeschlagen, einen weltweit einheitlichen Pilotkanal (Global Pilot Channel) auf einem einheitlichen Frequenzkanal bzw. in einem einheitlichen Frequenzspektrum einzuführen. Auf einem derartigen weltweiten Pilotkanal sollen Informationen über jeweils lokal verfügbare Funkzugangstechnologien (Radio Access Technology Indicator) sowie Verweise (Spectral Pointer) auf deren spektrale Lage als Zuriffsmöglichkeiten übertragen werden. Dadurch kann ein Endgerät eine geeignete bzw. unterstützte Funkzugangstechnologie als eine Zugriffsmöglichkeit zum Aufbau einer Funkschnittstelle auswählen und darauf zugreifen. Unter Funkzugangstechnologien sind dabei z.B. Systeme unterschiedlicher Standards, beispielsweise GSM und UMTS, zu verstehen, welche in unterschiedlichen Frequenzbändern operieren. Die Aussendung des Pilotkanals sollte nach obigem Dokument entweder von den Betreibern selbst, die entsprechend auch Informationen von konkurrierenden Betreibern aussenden müssten, oder aber von einer nicht näher spezifizierten nationalen Instanz, beispielsweise einer Regulierungsbehörde, erfolgen.

Ein solcher Pilotkanal, welcher auch als Cognitiver Pilot-Channel (CPC) oder als Common Pilot Channel bezeichnet wird, ist somit ein spezieller funkgestützter Kommunikationskanal, welcher Informationsdaten als Daten über die verfügbaren Funksysteme annonciert. Ein solcher Pilotkanal wird insbesondere für cognitive bzw. rekonfigurierbare Funkschnittstelleneinrichtungen vorgeschlagen, welche z.B. Konzepte wie ein flexibles Spektrummanagement oder eine dynamische Spektrumallokation unterstützen. Endgeräte mit solchen rekonfigurierbaren Funkschnittstelleneinrichtungen werden zunehmend interessanter mit Blick auf die sehr große Anzahl verschiedener Funk-Kommunikationssysteme, welche sich aus Sicht eines räumlich bewegenden Endgerätes sowohl über die Zeit als auch abhängig vom momentanen Aufenthaltsort ändern. In solchen Fällen würde es für ein Endgerät unpraktisch und zeitverbrauchend sein, das Funkspektrum bezüglich verfügbarer Zugriffsmöglichkeiten abzutasten.

Aus dem E²R-Projekt (siehe hierzu http://e2r2.motlabs.com/) ist ein Konzept mit einem kognitiven/allgemeinen Pilotkanal bekannt, welcher Informationsdaten über verfügbare Funksysteme annonciert. Abgesehen von dem allgemeinen Grundgedanken eines solchen kognitiven Pilotkanals zum Annoncieren von Informationsdaten bezüglich verfügbarer Funksysteme und möglicherweise auch zum Bereitstellen von Konfigurationsinformationen oder Konfigurationssoftware zum Ermöglichen des Konfigurierens einer rekonfigurierbaren Funkschnittstelleneinrichtung sind jedoch keine detaillierteren Informationen angegeben.

Aus der älteren europäischen Patentanmeldung EP 05027892.8 ist ein Konzept mit einem dreistufigen kognitiven Pilotkanal bekannt, welches darauf fokussiert ist, wie die Betreiber einen allgemeinen Pilotkanal organisieren, um die Verwendung eines Spektrums bezüglich verschiedener Funkzugriffstechnologien von insbesondere beliebigen Betreibern als Zugriffsmöglichkeiten anzuzeigen. Jedoch sind die angegebenen Möglichkeiten ebenfalls begrenzt.

Aus DE 199 20 587 C2 ist gattungsfremd ein Aufbau und eine ständige Pflege einer Funkfelddatenbank durch Messdaten bekannt, welche während einer Kommunikationsphase aufgenommen werden, wobei bei der Mobilstation als Endgerät verfügbare Messdaten mit Ortungsinformation verknüpft werden und diese Informationen in einem zur festen Netzinfrastruktur gehörenden Netzelement an eine geeignete Schnittstelle übergeben und ausgewertet werden. Derart durch die Funknetzinfrastruktur aufbereitete Messdaten werden von dieser auf Abruf bereitgehalten, um eine Ortung eines mobilen Endgerätes auch außerhalb von Kommunikationsphasen zu ermöglichen. Ein Bezug zu Pilotkanälen ist dabei jedoch nicht erkennbar.

Die Aufgabe der Erfindung besteht darin, ein Verfahren zum Bereitstellen von Daten über einen Pilotkanal eines Funk-Kommunikationssystems sowie ein Endgerät und eine netzseitige Netzeinrichtung zum Durchführen bzw. Unterstützen eines solchen Verfahrens anzugeben, welche es ermöglichen, auf einfache und schnelle Weise Daten des Pilotkanals an tatsächliche Bedingungen angepasst bereitzustellen.

Diese Aufgabe wird durch die Merkmale der unabhängigen Patentansprüche gelöst. Vorteilhafte Ausgestaltungen der Erfindung sind abhängigen Patentansprüchen entnehmbar.

Bevorzugt wird demgemäß ein Verfahren zum Bereitstellen von ersten Daten über einen Pilotkanal eines Funk-Kommunikationssystems, bei dem der Pilotkanal mit den ersten Daten Informationsdaten zu gegebenenfalls im Empfangsbereich befindlichen Endgeräten über für einen Verbindungsaufbau über eine Funkschnittstelle verfügbare Zugriffsmöglichkeiten aus einer Vielzahl verschiedenartiger für solche Endgeräte zugreifbarer Zugriffsmöglichkeiten überträgt. Vorteilhaft ist dabei, wenn netzseitig zum Bereitstellen der ersten Daten von zumindest einem solchen Endgerät empfangene zweite Daten verwendet werden, wobei sich die empfangenen zweiten Daten auf aus Sicht des Endgerätes verfügbare Zugriffsmöglichkeiten beziehen. Auf vorteilhafte Art und Weise werden dadurch Daten eines Pilotkanals regional und zeitlich durch Unterstützung von Endgeräten an tatsächliche Gegebenheiten anpassbar. Die verschiedenen Zugriffsmöglichkeiten werden insbesondere über verschiedene Zugriffstechnologien geboten.

Das Endgerät führt bevorzugt Messungen bezüglich einer Verfügbarkeit von durch das Endgerät messbaren Zugriffsmöglichkeiten durch und sendet Messergebnisse als solche durch die netzseitige Netzeinrichtung zu empfangende zweite Daten aus. Vorteilhaft wird dadurch ermöglicht, dass auch Zugriffsmöglichkeiten auf Ressourcen im Pilotkanal berücksichtigt werden können, welche seitens eines den Pilotkanal bereitstellenden Netzbetreibers ansonsten möglicherweise nicht verfügbar wären. Außerdem können aus Sicht des Netzbetreibers verfügbare Ressourcen, welche für das Endgerät jedoch tatsächlich nicht oder nicht ausreichend verfügbar sind, auf diese Art und Weise ermittelt und durch entsprechende Vermerke oder Löschungen in den nachfolgend über den Pilotkanal gesendeten ersten Daten berücksichtigt werden.

Das Endgerät führt außerdem bevorzugt Messungen über von den Pilotkanal mittels zuvor empfangener der ersten Daten mitgeteilten Zugriffsmöglichkeiten durch und sendet Messergebnisse als solche durch die netzseitige Netzeinrichtung zu empfangenden zweite Daten aus. Mittels Messungen durch Endgeräte kann somit kontinuierlich der Empfang von über den Pilotkanal gesendeten ersten Daten mit tatsächlichen Empfangsbedingungen an den jeweiligen Positionen der Endgeräte abgeglichen werden. Gegebenenfalls können erste Daten auf dem Pilotkanal nach einer Meldung seitens eines Endgerätes an die netzseitige Netzeinrichtung für zukünftige Übertragungen über den Pilotkanal korrigiert werden.

Vorteilhaft kann zumindest ein Teil der ersten Daten als verschlüsselte Daten zum Übertragen über den Pilotkanal zum entschlüsselbaren Empfangen durch nur eines oder mehrere bestimmte der Endgeräte bereitgestellt werden. Beispielsweise kann ein Netzbetreiber dadurch bewirken, dass nur bei ihm registrierte Endgeräte in die Lage versetzt werden, übertragene erste Daten bezüglich Zugriffsmöglichkeiten auf eine oder mehrere von ihm bereitgestellte Ressourcen empfangen zu können.

Bevorzugt wird zumindest ein Teil der ersten Daten als zertifizierte Daten zum Übertragen über den Pilotkanal bereitgestellt. Dadurch werden die seitens eines Endgerätes über den Pilotkanal empfangenen ersten Daten als von einem ganz bestimmten Datenbereitsteller bereitgestellte und somit vertrauenswürdige Daten erkennbar.

Vorteilhaft kann zumindest ein Teil der ersten Daten als gefilterte Daten zum Übertragen über den Pilotkanal bereitgestellt werden. Dies ermöglicht einem Netzbetreiber, welcher dem Betreiber eines Pilotkanals Informationen bereitstellt oder auch dem Betreiber eines Pilotkanals selber, bestimmte Informationsgehalte herauszufiltern bzw. nur bestimmte Informationsgehalte hindurchzulassen, so dass beispielsweise nur geprüfte oder vertrauenswürdige Daten über den Pilotkanal gesendet werden.

Mit den empfangenen zweiten Daten wird vorteilhaft eine Endgeräte-Identifizierungsinformation und/oder eine Teilnehmer-Identifizierungsinformation und/oder in Verbindung mit den empfangenen Daten eine derartige Endgeräte-Identifizierungsinformation und/oder Teilnehmer-Identifizierungsinformation empfangen, wobei die Endgeräte-Identifizierungsinformation bzw. die Teilnehmer-Identifizierungsinformation zusammen mit den empfangenen zweiten Daten und/oder einer zugeordneten Vergebührungsinformation bezogen auf die Endgeräte-Identifizierungsinformation bzw. die Teilnehmer-Identifizierungsinformation netzseitig verarbeitet und/oder gespeichert werden.

Durch das Verarbeiten kann vorteilhaft eine Vergebührung zu Gunsten oder zu Lasten eines dem Endgerät zugeordneten Kontos ausgelöst werden.

Eigenständig vorteilhaft ist ein Endgerät mit einer Funkschnittstelleneinrichtung zum Aufbauen einer Funkschnittstelle zu einer netzseitigen Zugriffseinrichtung eines Funk-Kommunikationssystems, wobei die Funkschnittstelleneinrichtung ausgelegt ist, sich für einen Verbindungsaufbau über die Funkschnittstelle abhängig von einer verfügbaren Zugriffsmöglichkeit aus einer Vielzahl verschiedenartig für solche Endgeräte zugreifbarer Zugriffsmöglichkeiten zu konfigurieren, und wobei eine im Endgerät integrierte Steuereinrichtung Messungen bezüglich aus Sicht des Endgerätes verfügbaren Zugriffsmöglichkeiten durchführt und derart ermittelte Daten über eine aufgebaute Funkschnittstelle an eine netzseitige Netzeinrichtung zur dortigen Verarbeitung zum Bereitstellen von ersten Daten für den Pilotkanal überträgt.

Ein solches Endgerät verwendet zur Rekonfigurierung bevorzugt über einen Pilotkanal empfangene erste Daten, welche so sogar durch das Endgerät selber oder ein anderes im Empfangsbereich bereits zuvor aktives Endgerät aktuell gehalten werden können.

Eigenständig vorteilhaft ist eine netzseitige Netzeinrichtung eines Funk-Kommunikationssystems mit einer Steuereinrichtung zum Empfangen von Messdaten eines über eine Funkschnittstelle angeschlossenen Endgerätes als empfangene zweite Daten und zum Bereitstellen von ersten Daten zur Übertragung über einen Pilotkanal des Funk-Kommunikationssystems, wobei mit den ersten Daten Informationsdaten zu gegebenenfalls im Empfangsbereich befindlichen Endgeräten über für einen Verbindungsaufbau über eine Funkschnittstelle verfügbare Zugriffsmöglichkeiten aus einer Vielzahl verschiedenartiger für solche Endgeräte zugreifbarer Zugriffsmöglichkeiten verschiedenartiger Funkzugriffstechnologie übertragen werden, und wobei die Netzeinrichtung die Daten abhängig von seitens des zumindest einen Endgerätes gemessenen und seitens der Netzeinrichtung empfangenen zweiten Daten aktualisiert. Mit den Informationsdaten über verfügbare Zugriffsmöglichkeiten werden vorzugsweise auch Informationen über verschiedene Betreiber übertragen.

Ein solches Verfahren, ein solches Endgerät bzw. eine solche netzseitige Netzeinrichtung sind besonders vorteilhaft einsetzbar, wenn die ersten Daten über die Zugriffsmöglichkeiten und/oder die empfangenen zweiten Daten auf physikalische Zugangsparameter zu zumindest einem Funk-Kommunikationssystem bezogen sind. Übertragbar sind somit über den Pilotkanal aktuelle physikalische Zugangsparameter als die Zugriffsmöglichkeiten in Form von z.B. verfügbaren Frequenzen, verfügbaren Zeitschlitzen oder verfügbaren Verschlüsselungssystemen oder Verschränkungssystemen.

Ein solches Verfahren, ein solches Endgerät bzw. eine solche netzseitige Netzeinrichtung sind besonders vorteilhaft einsetzbar, wenn die Daten über die Zugriffsmöglichkeiten und/oder die empfangenen Daten auf aktuelle logische Zugangsparameter zu zumindest einem Funk-Kommunikationssystem bezogen sind. Dadurch können auf einfache Art und Weise Betreiberinformationen übermittelt werden, so dass mittels des Pilotkanals für ein Endgerät jederzeit aktuell erfassbar ist, ob sein bevorzugter Betreiber Ressourcen für den Aufbau einer Funkschnittstelle bereitstellt. Logische Zugangsparameter sind z.B. auch Informationen über gegebenenfalls seitens eines Betreibers oder Zugangs verfügbare Dienste.

Ein solches Verfahren, ein solches Endgerät bzw. eine solche netzseitige Netzeinrichtung sind besonders vorteilhaft einsetzbar, wenn diese ausgelegt sind zum Rekonfigurieren einer rekonfigurierbaren Funkschnittstelle in einem solchen Endgerät für einen Verbindungsaufbau bezüglich einer durch das Endgerät auswählbaren von solchen verfügbaren Zugriffsmöglichkeiten als verfügbaren Funkzugriffstechnologien.

Bevorzugt wird somit insbesondere ein Managementsystem für einen kognitiven bzw. gemeinsamen Pilotkanal zum Handhaben bzw. Bereitstellen von Informationen, welche über einen entsprechenden Pilotkanal übertragen werden. Das Basissystem besteht dabei insbesondere aus einer Pilotkanal-Managementstation, zumindest einer Pilotkanal-Übertragungsstation, zumindest einer Basisstation eines Kommunikationssystems und zumindest einem Endgerät des Funk-Kommunikationsgeräts mit einer rekonfigurierbaren Funkschnittstelleneinrichtung.

Für beispielsweise eine Bereitstellung eines derartigen Pilotkanals, bei welchem die Verfügbarkeit eines Funknetzes durch die jeweilige Lokation bzw. den Ort definiert ist, wird vorteilhaft ein Verfahren bereitgestellt, welches positionsbezogene Messungen zum Sammeln von Informationen durch Endgeräte bereitstellt. Von einem Endgerät gesammelte Informationen werden insbesondere durch die Pilotkanal-Managementstation aufbereitet und über die zumindest eine Pilotkanal-Übertragungsstation mittels des Pilotkanals an Endgeräte im Empfangsbereich des Pilotkanals übertragen. Die im Pilotkanal übertragenen Informationen beschreiben die Kommunikationssysteme, welche durch verfügbare Basisstationen angeboten werden, sowie die Art der Funkkommunikation bzw. Konfigurationen, welche durch die Basisstationen verwendet werden. Die über den Pilotkanal empfangenen Informationen werden durch Endgeräte empfangen und verwendet, um eine Funkzugriffstechnologie auszuwählen und entsprechend die rekonfigurierbare Funkschnittstelleneinrichtung des Endgerätes auf die gewünschte Funkzugriffstechnologie zu konfigurieren, welche durch die annoncierte Pilotkanalinformation empfangen wurde.

Über den Pilotkanal übertragene Informationen können in vielfältiger Weise sowohl physikalische als auch logische Informationen umfassen. Insbesondere können die Informationen Angaben umfassen bezüglich Frequenzen, Lokationen, Zeiten bzw. Zeitpunkten sowie Beschreibungen von Funkzugriffstechnologien, beispielsweise bezüglich Modulation, Frequenz oder Leistung. Die Informationen können neben zu verwendenden Datenwerten beispielsweise auch Abweichungswerte zu Basisstandardwerten umfassen. Optional kann auch eine Rekonfigurationssoftware und eine Konfigurationsbeschreibung über einen solchen Pilotkanal als Information im weiter gefassten Sinne übertragen werden.

Ein Ausführungsbeispiel und Modifikationen dazu werden nachfolgend anhand der Zeichnung näher dargestellt. Es zeigen:
- Fig. 1: schematisch Komponenten von Funk-Kommunikationssystemen sowie Komponenten zur Bereitstellung und Übertragung eines Pilotkanals,
- Fig. 2: eine gegenüber Fig. 1 modifizierte Ausgestaltung,
- Fig. 3: schematisch Informationsblöcke, welche als Pilotkanalinformation über den Pilotkanal übertragen werden bzw. als Messinformation von Endgeräten in Richtung einer Pilotkanal-Managementstation übertragen werden, und
- Fig. 4: eine weitere schematische Darstellung bezüglich verarbeiteter und übertragener Daten.

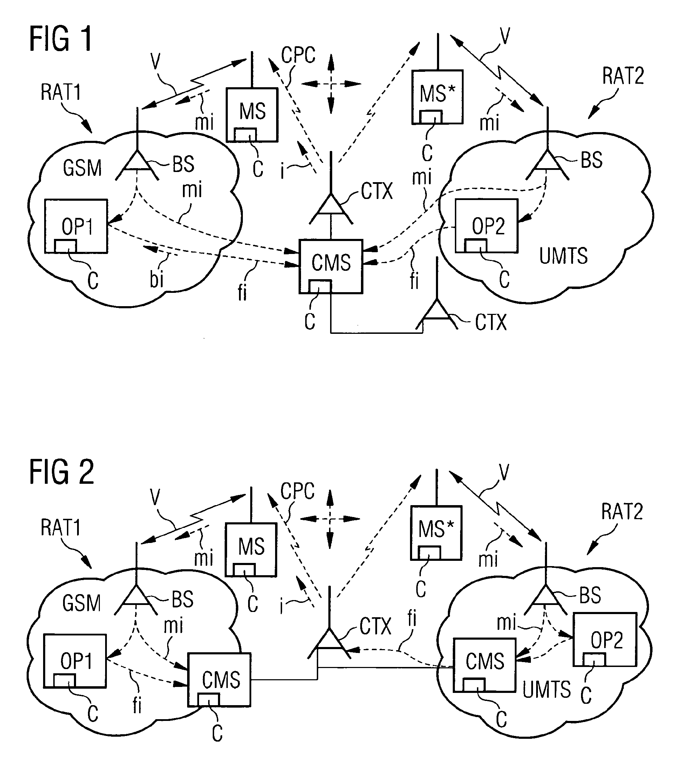

Fig. 1 zeigt beispielhaft eine Anordnung zweier verschiedenartiger Funknetze, welche gemäß unterschiedlichen Standards, z.B. GSM bzw. UMTS betrieben werden. Aus Sicht von Endgeräten MS, MS*, welche eine insbesondere rekonfigurierbare Funkschnittstelleneinrichtung aufweisen und in der Lage sind, über derartige Funk-Kommunikationssysteme GSM, UMTS verschiedener Standards insbesondere wahlweise zu kommunizieren, bestehen somit zumindest zwei Möglichkeiten, eine Funkschnittstelle für eine Funkverbindung V aufzubauen. Bei dem dargestellten Beispiel wird angenommen, dass sich zumindest das erste dargestellte Endgerät MS im Bereich von Funkzellen befindet, welche durch die entsprechenden Basisstationen BS der beiden Funk-Kommunikationssysteme GSM, UMTS aufgebaut werden. Das Endgerät MS hat somit die Möglichkeit, eine entsprechende Funkverbindung V zu wahlweise einem Funk-Kommunikationssystem GSM bzw. UMTS einer ersten Funkzugriffstechnologie RAT1 oder einer zweiten Funkzugriffstechnologie RAT2 aufzubauen. Dabei wird nicht ausgeschlossen, dass das Endgerät MS insbesondere im Falle zweier integrierter Funkschnittstelleneinrichtungen parallel auch auf beide Funk-Kommunikationssysteme GSM, UMTS gleichzeitig zugreifen könnte.

Um einem Endgerät MS insbesondere nach dessen Aktivierung ein aufwändiges Scannen der Umgebung nach verfügbaren Funkzugriffstechnologien RAT1, RAT2 zu ersparen, wird von einer Pilotkanal-Managementstation CMS über eine oder mehrere Pilotkanal-Sendestationen CTX ein Pilotkanal CPC ausgesendet, wie er für sich genommen z.B. als kognitiver oder allgemeiner Pilotkanal bekannt ist.

Mittels des Pilotkanals CPC werden Daten i als Pilotkanalinformationen übertragen. Diese Daten i umfassen Informationen über die Funkzugriffstechnologien RAT1, RAT2. Das Endgerät MS versucht entsprechend zumindest nach seiner Aktivierung entsprechende Daten i des Pilotkanals CPC zu empfangen und dadurch zeitsparend gegenüber einem Abtasten der Umgebung schnell Informationen über verfügbare Funkzugriffstechnologien RAT1, RAT2 aus einer Vielzahl theoretisch noch weiterer Funkzugriffstechnologien zu erlangen. Entsprechend kann das Endgerät MS bzw. dessen Steuereinrichtung C eine für die gewünschte Funkverbindung V geeignete Funkzugriffstechnologie RAT1 auswählen und die entsprechende Funkverbindung V zu der entsprechenden Basisstation BS des gewünschten Funk-Kommunikationssystems GSM aufbauen. Vorzugsweise überwacht das Endgerät MS auch nach seiner Aktivierung den Pilotkanal CPC kontinuierlich, um stets über aktuell verfügbare Funkzugriffstechnologien RAT1, RAT2 informiert zu sein und gegebenenfalls einen Wechsel vornehmen zu können.

Zur Unterstützung der Pilotkanal-Managementstation CMS bzw. von deren Betreiber werden von dem Endgerät MS insbesondere während Untätigkeitsphasen des Endgerätes MS Messungen vorgenommen, um die Verfügbarkeit von Funkzugriffstechnologien RAT1, RAT2 in der Umgebung des Endgerätes MS zu prüfen. Diese Messungen können in Art eines für sich bekannten Abtastens durchgeführt werden. Anschließend stellte das Endgerät MS die Messergebnisse als durch die Pilotkanal-Managementstation CMS zu empfangenden Daten mi bereit, wobei die Pilotkanal-Managementstation CMS eine netzseitige Netzeinrichtung ist. Diese durch die Pilotkanal-Managementstation CMS zu empfangenden Daten mi werden von dem Endgerät MS vorzugsweise über die Funkschnittstelle V und die Basisstation BS gemäß einer ersten Option direkt an die Pilotkanal-Managementstation CMS weitergeleitet. Die Pilotkanal-Managementstation CMS kann die empfangenen Daten mi, welche Informationen über tatsächlich Parameter von Funkzugriffstechnologien RAT1, RAT2 umfassen, mit den aktuell in der Pilotkanal-Managementstation CMS vorliegenden Daten vergleichen und gegebenenfalls eine Aktualisierung der über den Pilotkanal CPC nachfolgend auszusendenden Daten i durchführen. Durch eine solche Verfahrensweise unterstützt das Endgerät MS somit die Pilotkanal-Managementstation CMS dabei, stets aktuelle und tatsächlich zutreffende Informationen über verfügbare Zugriffsmöglichkeiten in Form der verfügbaren Zugriffstechnologien RAT1, RAT2 auszusenden.

Abweichend von diesem sehr einfachen Grundprinzip können verschiedenartige Modifikationen einzeln oder auch in Kombination durchgeführt werden.

Gemäß einer ersten Modifikation kann das Endgerät MS bereits selber einen Vergleich der über den Pilotkanal CPC empfangenen Daten i mit selber gemessenen Daten durchführen und gegebenenfalls zur Übertragung an die Pilotkanal-Managementstation CMS lediglich Differenzdaten bereitstellen. Die Pilotkanal-Managementstation CMS erhält somit nur empfangene Daten mi, welche in Art einer Korrektur Abweichungen der ausgesendeten Daten i bezüglich der tatsächlich vorliegenden Empfangsbedingungen am Ort des Endgerätes MS betreffen. Eine Ressourcen verschwendende Übertragung von für die Korrektur nicht erforderlichen Daten wird vermieden.

Insbesondere vorteilhaft ist dabei auch eine Übertragung einer Ortsinformation seitens des Endgerätes MS, so dass durch die Pilotkanal-Managementstation CMS lokale Bedingungen berücksichtigt werden können und gegebenenfalls im Falle einer bekannten funktechnischen Anomalie Abweichungen auch ignoriert werden können.

Gemäß einer weiteren Modifikation überträgt die Basisstation BS die von dem Endgerät MS empfangenen Daten mi nicht direkt an die Pilotkanal-Managementstation CMS sondern zusätzlich oder alternativ an eine Verarbeitungseinrichtung des Betreibers OP1, OP2 innerhalb des eigenen Funk-Kommunikationssystems GSM bzw. UMTS. Der Betreiber OP1 kann mit seiner entsprechenden Netzeinrichtung bzw. einer darin integrierten Steuereinrichtung C die vom Endgerät MS empfangenen Daten mi analysieren und gegebenenfalls aufbereiten, insbesondere filtern. Derart aufbereitete und/oder gefilterte Daten fi werden dann von der Verarbeitungseinrichtung des Betreibers OP1, OP2 an die Pilotkanal-Managementstation CMS weitergeleitet. Dadurch kann der Betreiber OP1, OP2 bewirken, dass bezüglich der Zugriffsmöglichkeiten auf Ressourcen seines Funk-Kommunikationssystems bzw. seiner Funkzugriffstechnologie RAT1, RAT2 nur bestimmte und von ihm gewünschte Informationen durch die Pilotkanal-Managementstation CMS in deren Steuereinrichtung C verarbeitet und als Informationen in den Daten i über den Pilotkanal CPC übertragen werden.

Beispielsweise kann der Betreiber OP1, OP2 dadurch bewirken, dass das Endgerät MS zwar eine bestimmte Zugriffsmöglichkeit auf das Funk-Kommunikationssystem misst und weitermeldet, die Pilotkanal-Managementstation CMS diese Informationen über die bestimmte gemessene Zugriffsmöglichkeit aber nicht erfährt oder mit einem Sperrvermerk übermittelt bekommt. Entsprechend wird in den Daten i des Pilotkanals CPC nicht auf diese spezielle Zugriffsmöglichkeit hingewiesen, so dass den Pilotkanal CPC verwendende Endgeräte MS, MS* von dieser speziellen Zugriffsmöglichkeit keine Kenntnis erlangen.

Gemäß einer weiteren beispielhaften Modifikation könnte das Endgerät MS auch lediglich gezielt über die Daten i des Pilotkanals CPC mitgeteilte Ressourcen der Funkzugriffstechnologien RAT1, RAT2 messen und deren Verfügbarkeit überprüfen.

Fig. 2 zeigt eine modifizierte Anordnung, bei welcher an Stelle einer einzigen Pilotkanal-Managementstation CMS mehrere Pilotkanal-Managementstationen CMS vorgesehen sind. Beispielhaft ist jedem der Funk-Kommunikationssysteme GSM, UMTS jeweils eine eigene solche Pilotkanal-Managementstation CMS zugeordnet. Diese stellen entsprechende Daten für den Pilotkanal CPC bereit und übertragen solche Daten an die Pilotkanal-Sendestation CTX. Diese stellt aus den derart empfangenen Daten geeignete Daten i zur Übertragung über den Pilotkanal CPC bereit, wozu der Pilotkanal-Sendestation CTX optional eine eigene Steuer- und Verarbeitungseinrichtung zugeordnet sein kann.

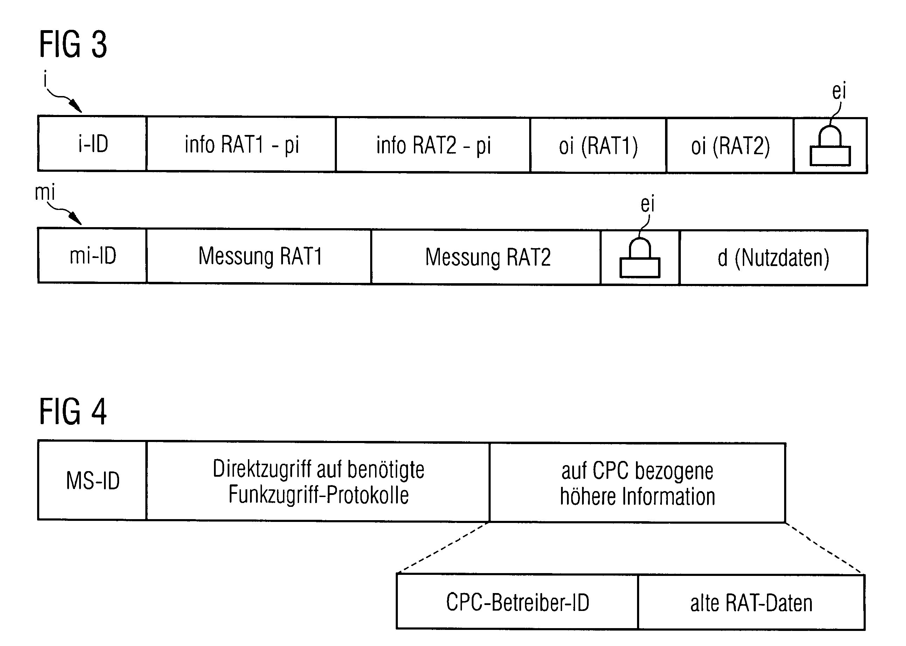

Fig. 3 zeigt oben beispielhafte Datenblöcke als Daten i, welche über den Pilotkanal CPC übertragen werden bzw. unten von der Pilotkanal-Managementstation CMS zu empfangende Daten mi, welche von einem Endgerät MS, MS* gemessen und an die Pilotkanal-Managementstation direkt oder indirekt übertragen werden. Beispielhaft werden als Daten i auf dem Pilotkanal CPC einleitend eine Pilotkanal-Identifizierungsinformation i-ID zur Einleitung eines Datenblocks gesendet. Nachfolgend werden jeweils für die verschiedenen Funkzugriffstechnologien RAT1, RAT2 in aufeinanderfolgenden Blöcken physikalische Informationen bzw. physikalische Zugangsparameter pi übertragen. Nach der Übertragung physikalischer Zugangsparameter pi können in weiteren Blöcken auch logische Zugangsparameter oi für die verschiedenen Funkzugriffstechnologien RAT1, RAT2 in weiteren Blöcken übertragen werden. Alternativ können natürlich auch jeweils in einem Block sowohl die physikalischen als auch die logischen Zugangsparameter pi, oi jeweils einer der Funkzugriffstechnologien RAT1, RAT2 und in weiteren Blöcken die entsprechenden physikalischen und logischen Zugangsparameter pi, oi weiterer Funkzugriffstechnologien RAT1, RAT2 übertragen werden. Natürlich können auch noch weitere Kombinationen von zu übertragenden Informationen innerhalb der Daten i gewählt werden.

Besonders vorteilhaft ist die Übertragung verschlüsselter Daten ei mittels der Daten i über den Pilotkanal CPC. Mittels derartig verschlüsselter Informationen können spezielle Zugangsparameter bezüglich Zugriffsmöglichkeiten übertragen werden, welche nicht für die Allgemeinheit der Endgeräte MS, MS* sondern nur für spezielle Endgeräte MS verwertbar sind, welche einen entsprechenden Schlüssel zum Entschlüsseln derart verschlüsselter Daten ei besitzen. Ein Betreiber OP1 eines Funk-Kommunikationssystems GSM kann dadurch bestimmte Zugriffsmöglichkeiten für nur ganz spezielle von ihm ausgewählte und autorisierte Endgeräte MS freigeben.

Neben der Übertragung von derart verschlüsselten Daten ei besteht vorteilhaft auch die Möglichkeit, zertifizierte Daten zu übertragen, so dass ein derart zertifizierte Daten empfangendes Endgerät MS die Echtheit der Daten i überprüfen kann.

Die von der Pilotkanal-Managementstation CMS zu empfangenden Daten mi können ebenfalls verschiedenartigste Informationen umfassen. Insbesondere wird zur Identifizierung der Datenquelle dieser empfangenen Daten mi eine Endgeräte-Identifizierungsinformation mi-ID übertragen. Im Fall nicht direkt sondern indirekt über eine solche Verarbeitungseinrichtung weitergeleiteter Daten mi wird gegebenenfalls zusätzlich oder alternativ eine Verarbeitungseinrichtungs-Identifizierungsinformation übertragen. Eine solche Endgeräte-Identifizierungsinformation mi-ID bietet den besonderen Vorteil, dass die Pilotkanal-Managementstation CMS oder eine mit dieser in Verbindung stehende Einrichtung oder Instanz empfangene Daten mi einem bestimmten Endgerät MS und/oder einer bestimmten Verarbeitungseinrichtung eines bestimmten Betreibers OP1 eindeutig zuordnen kann.

Dadurch können durch die Pilotkanal-Managementstation CMS gezielte Verarbeitungen der empfangenen Daten mi und der darin enthaltenen Informationen vorgenommen werden. Neben der Möglichkeit eines Ausschlusses im Fall des Empfangs von einem nicht berechtigten oder als unzuverlässig erkannten Endgerät besteht insbesondere auch die Möglichkeit, einer spezifischen Datenverarbeitung. Eine solche spezifische Datenverarbeitung kann beispielsweise die Berücksichtigung oder den Ausschluss spezieller oder ausgewählter Zugriffsmöglichkeiten auf die in den empfangenen Daten mi übermittelten Messergebnisse umfassen.

Besonders vorteilhaft ist auch die Übertragung einer Vergebührungsinformation bi (Fig. 1) von der Pilotkanal-Managementstation CMS oder einer damit in Verbindung stehenden Einrichtung an eine Vergebührungszentrale, um auf einem Konto des Benutzers des Endgerätes MS oder des Endgerätes MS selber eine geldwerte Gutschrift oder dergleichen eintragen zu lassen. Dadurch können Benutzer von Endgeräten MS einen Anreiz erfahren, ihr Endgerät MS für eine derartige Verfahrensweise zur Verfügung zu stellen.

Beschrieben ist somit ein Pilotkanal-Managementsystem, welches verschiedene Beiträge für das Management eines Pilotkanals CPC bietet. Das grundlegende Basissystem besteht bevorzugt aus der Pilotkanal-Managementstation CMS, worunter gegebenenfalls auch nur eine Steuereinrichtung innerhalb eines Computers einer Einrichtung eines Mobilfunk-Kommunikationssystems verstanden werden kann, sowie zumindest einer Pilotkanal-Sendestation, zumindest einer Basisstation eines Funk-Kommunikationssystems und zumindest einem Endgerät MS mit einer rekonfigurierbaren Funkschnittstelleneinrichtung. Anstelle einer Pilotkanal-Sendestation kann natürlich auch eine Basisstation eines bestehenden Funk-Kommunikationssystems verwendet werden. Das Endgerät konfiguriert seine Funkschnittstelleneinrichtung entsprechend einer ausgewählten verfügbaren Zugriffsmöglichkeit aus einer Vielzahl von tatsächlich oder theoretisch existierenden Zugriffsmöglichkeiten, welche gegebenenfalls über den Pilotkanal CPC übertragen werden oder übertragen werden könnten. Das Endgerät MS führt eigenständig Messungen durch, um unabhängig von den über den Pilotkanal CPC in den Daten i enthaltenen Informationen zusätzliche Informationen über Zugriffsmöglichkeiten auf Funkzugriffstechnologien zu erlangen und/oder über die Informationen der Daten i mitgeteilte Zugriffsmöglichkeiten zu Überprüfen. Durch eine Übermittlung derart gemessener Daten vom Endgerät MS direkt oder indirekt zu der Pilotkanal-Managementstation CMS erhält die Pilotkanal-Managementstation CMS empfangene Daten mi, welche zur Aktualisierung der über den Pilotkanal CPC nachfolgend auszusendenden Daten i dienen.

Ein solches Pilotkanal-Managementsystem kann vorteilhaft mit verschiedenartigen derzeit existierenden oder auch zukünftigen Managementverfahren kombiniert eingesetzt werden. Im Fall eines beispielsweise dreistufigen hierarchischen Pilotkanals, welcher beispielsweise untergliedert in sich einen Landes-Ebenen-Pilotkanal, einen Betreiber-Ebenen-Pilotkanal und einen Zugriffstechnologie-Rundfunkpilotkanal trägt, kann das Pilotkanal-Managementsystem CMS insbesondere mittels Informationen auf der Betreiberebene betrieben werden.

Möglich ist auch, das Pilotkanal-Managementsystem durch einen unabhängigen Pilotkanal-Betreiber zu betreiben, welcher unabhängig von Netzoperatoren bzw. Netzbetreibern Informationen sammelt und bereitstellt. Beispielsweise kann dazu ein Anwendungsdienst-Anbieter Informationen über Netze sammeln, welche durch deren jeweilige subskribierten Teilnehmer geliefert werden. Wenn die Informationen von mobilen Teilnehmern und/oder über deren Endgeräte gesammelt werden, ist eine Einbindung von Netzbetreibern nicht erforderlich. Möglich ist auch über Teilnehmer bzw. deren Endgeräte bereitgestellte Informationen zu verwenden, um Informationen zu verbessern, welche von Netzbetreibern geliefert wurden. Insbesondere können auch Erfahrungswerte von Teilnehmern bzw. deren Endgeräte ausgenutzt werden, wobei die Teilnehmer durch beispielsweise manuell eingegebene Zusatzinformationen oder das Übersenden der von ihnen gemessenen Daten an spezielle Zugangsnummern der Pilotkanal-Managementstation CMS auch eine Bewertung vornehmen können. Dadurch können Erfahrungswerte der Teilnehmer bezüglich Zuverlässigkeiten bestimmter Zugriffsmöglichkeiten bzw. Funkzugriffstechnologien RAT1, RAT2 mit in die Verarbeitung zur Bereitstellung der über den Pilotkanal CPC zu übertragenden Daten i einfließen.

Vorzugsweise kann eine Pilotkanal-Managementstation CMS auf Basis insbesondere zweier bevorzugter Vertragsgrundlagen betrieben werden. So können Verträge entsprechend mit Netzbetreibern und/oder mit Teilnehmern, d. h. Betreibern von Endgeräten MS, MS* geschlossen werden. Entsprechend werden spezielle Informationen, wie beispielsweise die Vergebührungsinformation bi verarbeitet und/oder bereitgestellt. Insbesondere kann vertragsabhängig auch die Verarbeitung von über den Pilotkanal CPC zu sendenden Daten i speziell, beispielsweise durch individuelle Filtervorgänge, durchgeführt werden, welche in einer Steuereinrichtung C einer der Komponenten ablaufen. Eine Vereinbarung mit Betreibern definiert, welche Informationen bezüglich der Netze des Betreiber über den Pilotkanal CPC übertragen werden, sowie gegebenenfalls ob eine Bezahlung an den Pilotkanal-Betreiber durchzuführen ist. Vereinbarungen mit Teilnehmern definieren, welche Informationen als Bestandteil der Daten i bestimmten Teilnehmern bzw. deren Endgeräten MS über den Pilotkanal CPC übertragen werden. Insbesondere durch Verschlüsselung können so nicht autorisierte Endgeräte MS* vom Empfang bzw. der Verwertung spezieller Informationsgehalte der Daten i ausgeschlossen werden. Dadurch können über den Pilotkanal CPC beispielsweise gebührenfrei grundlegende Informationen übertragen werden, während Premiuminformationen mit beispielsweise einer höheren Genauigkeit, einem größere Informationsgehalt, beispielsweise Gebühreninformationen, nur für bezahlende Teilnehmer bzw. Endgeräte MS bereitgestellt werden.

Möglich als ein Umsetzungsmodell ist auch die Bereitstellung einer Pilotkanal-Information durch Heimnetzbetreiber unter Verwendung von Informationen, welche durch dessen subskribierte Teilnehmer mitgeteilt werden. Ein Heimnetzbetreiber bietet keine globale Sicht sondern bietet als Betreiber lediglich Informationen zu den bei ihm subskribierten Teilnehmern bzw. Endgeräten. Bei einer solchen Umsetzung ist eine Kooperation mit einem besuchten Netzbetreiber zum Bereitstellen von Informationen nicht erforderlich.

Besonders vorteilhaft ist, dass eine Pilotkanal-Information in Form der Daten i nicht nur über in Funk-Kommunikationssystemen bereits integrierte Sendestationen sondern auch über ein separates Pilotkanal-Funksystem übertragen werden können. Prinzipiell ist bei der Übertragung des Pilotkanals über verfügbare Netzugriffstechnologien die Verwendung verschiedenartigster Zugriffstechnologien möglich, so dass Pilotkanalinformationen beispielsweise durch Herunterladen von einem HTTP-Server, d. h. einer über das Internet angebundenen Einrichtung, durch fest verdrahtete Netze erlangt und in dem Endgerät gespeichert werden können. Dieser letztgenannte Fall kann insbesondere relevant sein, falls irgendeine Konnektivität in das Internet bereits besteht oder in der jüngeren Vergangenheit bestand.

Aus solchen Informationen können Teilnehmer bzw. deren Endgeräte erfahren, welche Kommunikationssysteme verfügbar sind, obwohl ein separates Pilotkanal-System momentan möglicherweise nicht verfügbar ist. Eine mangelnde Verfügbarkeit kann insbesondere bestehen, wenn ein Teilnehmer mit seinem Endgerät in einer entfernten Region, beispielsweise in einem anderen Land oder auf einem anderen Kontinent kommunizieren möchte, wobei sein Endgerät beispielsweise außerhalb des Landes des für einen Pilotkanal betriebenen Funksystems liegt. Geboten wird dadurch eine individuelle Übertragung nicht nur über einen funkgestützten Pilotkanal sondern gegebenenfalls auch über einen kabelgestützten Pilotkanal mittels Übertragung der Daten i über eine Internetverbindung. Insbesondere kann dabei jedoch auch über eine Funkschnittstelle auf eine bestimmte Zugangsnummer zugegriffen werden, welche einen Zugriff auf das Internet und darüber auf das Pilotkanal-Managementsystem ermöglicht.

Vorteilhaft können insbesondere dadurch Heimnetzbetreiber Informationen verwenden, welche durch Teilnehmer übertragen werden, welche zuvor andere Netze besucht haben. In einem solchen Fall werden die von dem Endgerät gemessenen Daten durch die Pilotkanal-Managementstation zu einem späteren Zeitpunkt verzögert als empfangene Daten mi erhalten. Möglich ist auch, dass ein Endgerät, welches ein fremdes Netz besucht, mittels eines Software-Agenten in dem Endgerät Bestätigungsberichte zu seinem Heimnetzbetreiber sendet, um dadurch entsprechende Messdaten zu übertragen.

Übertragen werden kann eine Vielzahl verschiedenartigster Informationen wie beispielsweise die Anzeige eines existierenden Teilnehmernetzes, verwendete Dienste, beispielsweise VoIP (Voice over InternetProtocol / deutsch: Sprache über Internet) oder Internetzugänge, zusätzliche Informationen, wie Zeit, Lokation, Netzüberwachungsinformationen und auch Qualitäts-Parameter. Mittels Qualitäts-Parametern kann beispielsweise angezeigt werden, ob verfügbare Ressourcen eine ausreichende Qualität bieten, es können aber auch detaillierte Informationen wie beispielsweise eine Paketverlustrate, eine Signalstärke, eine Bit-Fehlerrate etc. übertragen werden. Der Heimnetzbetreiber kompiliert diese Informationen, welche durch vorzugsweise eine Vielzahl von Teilnehmern, insbesondere seinen Subscribern, bzw. von deren Endgeräten geliefert wurden und stellt die Informationen in vorzugsweise kompilierter Form als Basis für eine Netzauswahl und/oder einen Netzübergang (engl. handover) bereit.

Beispielhaft wird gemäß Fig. 4 mit den Daten eine Endgerätebetreiber-Identifizierungsinformation MS-ID übertragen, wobei nachfolgend ein Direktzugriff auf benötigte Funkzugriffs-Protokolle sowie danach auf den Pilotkanal CPC bezogene höhere Informationen übertragen werden. Letztere können wiederum insbesondere eine Betreiber-Identifizierungsinformation bezüglich des Pilotkanals CPC und alte Funkzugriffstechnologie-Daten umfassen, welche beim Abgleich berücksichtigt werden.

Bereitgestellt wird entsprechend ein offenes System für ein effizientes Managen von Pilotkanal-Informationen einschließlich vorzugsweise auch einer Vergütungs-Managementprozedur und eines Zertifizierungsprozesses für eine Lieferung von zeitnah oder zeitgleich gelieferten Pilotkanal-Kontexten. Vorteilhaft ist auch die Ermöglichung einer selbst organisierenden und/oder sich selbst aktualisierenden Pilotkanal-Information auf Basis von Berichten, welche durch Endgeräte gesendet werden. Besonders vorteilhaft ist die Möglichkeit einer Filterung und/oder Priorisierung von über den Pilotkanal CPC übertragenen Informationsgehalten der Daten i.

Möglich ist insbesondere vorteilhaft auch eine Kompensation für den Betreiber des Pilotkanals CPC, wenn die über den Pilotkanal CPC übermittelten Informationen durch einen Teilnehmer zur Auswahl eines bestimmten Netzes verwendet werden. Ermöglicht wird somit vorteilhaft, dass nicht nur Funknetzbetreiber, welche eine Funkzugriffstechnologie mit Zugriffsmöglichkeiten betreiben, Informationen darüber an eine Pilotkanal-Managementstation übertragen, welche derartige Informationen validiert, sondern insbesondere auch die Möglichkeit der Kombination von Informationen verschiedener Quellen einschließlich Endgeräten.

Besonders vorteilhaft ist die Zertifizierung des Betreibers des Pilotkanals. Durch eine zertifizierte Übertragung der Daten i über den Pilotkanal CPC kann ein solche Daten i empfangendes Endgerät MS, MS* nach einer entsprechenden Überprüfung in seiner Steuereinrichtung mit einem entsprechenden Prüfcode die Echtheit des Absenders prüfen und entsprechend vertrauensvoll eine Entscheidung bezüglich eines Verbindungsaufbaus oder Verbindungswechsels treffen. Entsprechend kann eine Zertifizierung der Daten i mittels eines digitalen Zertifikats durch die Pilotkanal-Managementstation CMS vorgenommen werden. Prinzipiell möglich und vorteilhaft ist auch die unveränderte Weiterleitung zertifizierter Daten, welche die Pilotkanal-Managementstation CMS von einer Netzeinrichtung eines Operators OP1 eines der Funkzugriffsnetze GSM empfangen hat. Vorteilhaft kann durch eine Zertifikatsverwaltung sichergestellt werden, dass nur denjenigen Betreibern ein Zertifikat ausgegeben wird, welche zur Lieferung von Pilotkanal-Inhalten als qualifizierte Betreiber bezüglich Zuverlässigkeit und/oder Pünktlichkeit registriert sind. Neben der Feststellung der Identität eines Pilotkanal-Betreibers kann ein Zertifikat auch eine zusätzliche Information bescheinigen, welche bezüglich der über den Pilotkanal CPC gelieferten Datenqualität festgelegt ist. Eine Zertifizierung kann beispielsweise durch eine Prüfkanal-Überwachungsinstitution erfolgen, welche bescheinigt, dass der Pilotkanal-Betreiber eine erforderliche Akzeptanz hinsichtlich seiner Datenqualität bietet.

Zertifiziert werden können auch Dienste-Qualitäten oder Dienste-Eigenschaften, beispielsweise eine zugesicherte und überprüfte Reaktionszeit, das heißt beispielsweise nach welcher maximalen Verzögerung neue aktualisierte Informationen nach einer Änderung einer Zugriffstechnologie-Konfiguration verfügbar sind. Weiterhin kann bescheinigt werden, welche Arten von Funkzugriffstechnologien durch den Pilotkanal annonciert werden. So kann beispielsweise ein bestimmter Pilotkanal-Betreiber nur Informationen über kommerzielle funkgestützte Systeme liefern, nicht aber über öffentlich sichere und professionelle Funksysteme. Weiterhin können Regionsinformationen bescheinigt werden, welche über den Pilotkanal angeboten werden. Mit einem Zertifikat kann auch bescheinigt werden, welche Art von Information geboten wird, beispielsweise ob nur Basisdaten angeboten werden oder auch eine weitergehende Information wie beispielsweise eine Netzauslastung, Gebühreninformationen oder Roaming-Vereinbarungen. Derartige Informationen ermöglichen der Steuereinrichtung C des Endgerätes MS die Vertrauenswürdigkeit der gelieferten Information mittels einer durchgeführten Schlüsselüberprüfung bzw. Zertifikatüberprüfung zu überprüfen und die erhaltenen Informationen entsprechend geeignet handzuhaben.

Ein solcher öffentlicher Schlüssel, welcher durch das Zertifikat zertifiziert wird, kann direkt durch den Betreiber des Pilotkanals CPC verwendet werden, um die darüber übermittelten Informationen digital zu signieren. Natürlich können auch andere derzeit bekannte oder zukünftige Sicherheitstechnologien für Rundfunk-/Mehrwege-Verbreitungs-Systeme verwendet werden, beispielsweise als 3GPP MBMS Security.

Betreiber eines Pilotkanals CPC können vorteilhaft das Verhalten eines Endgerätes bzw. von dessen Teilnehmer überwachen. Falls beispielsweise im Fall der Situation gemäß Fig. 1 das Endgerät MS seinem Betreiber OP eine Betreiber-Identifizierungsinformation des Pilotkanals CPC übermittelt, kann im Fall einer falschen Rekonfigurierung des Endgerätes MS aufgrund einer falschen Information auf dem Pilotkanal CPC der Betreiber OP1 diesen Fehler identifizieren. Gegenmaßnahmen können beispielsweise eine Reduzierung einer Vergebührung oder ein Widerruf des Zertifikats sein.

Eigenständig vorteilhaft ist auch eine Selbstorganisation und/oder Aktualisierung des Pilotkanals, wie sie anhand der Fig. 1 und 2 beschrieben ist. Im Rahmen einer Modifizierung oder eines Zusatzes zu der beschriebenen Verfahrensweise kann vorgesehen werden, dass die Pilotkanal-Managementstation CMS über die Daten i auch eine zusätzliche Information in Art einer Meta-Information aussendet, welche beschreibt, welche Art oder Inhalte die übertragenen Informationen haben sollen. Wenn ein Endgerät MS ermittelt, dass eine Funkzugriffstechnologie bzw. eine Zugriffsmöglichkeit von den Daten i des Pilotkanals CPC abweicht, kann sie aufgrund einer Aussage der Meta-Information gegebenenfalls feststellen, dass diese Funkzugriffstechnologie vom Pilotkanal CPC nicht berücksichtigt wird und somit die Abweichung nicht notwendig an die Pilotkanal-Managementstation CMS zu melden ist. Derartige Filtermechanismen können vorzugsweise in einer stufenweisen iterativen Art und Weise implementiert werden.

Zur Durchführung der verschiedenen beschriebenen Verfahrensweisen können verschiedene Komponenten innerhalb derartiger Funk-Kommunikationssysteme oder auch eigenständige Einrichtungen mit Steuereinrichtungen C zum Ausführen solcher Verfahren ausgestattet sein. Vorzugsweise weist die Pilotkanal-Managementstation CMS zwei besondere Funktionen auf, eine Informationsfilterung und eine Informationspriorisierung. Natürlich können solche Funktionen zusätzlich oder alternativ auch in netzseitigen Verarbeitungseinrichtungen der verschiedenen Funk-Kommunikationssysteme bereitgestellt sein.

Im Rahmen der Informationsfilterung bestimmt die Pilotkanal-Managementstation CMS verfügbare Funksysteme insbesondere mit Blick auf einen vollständigen Informationsgehalt und reduziert nachfolgend die Information, so dass ein Endgerät MS eine Kommunikation über zumindest eine Zugriffsmöglichkeit mit zumindest einer Netzzugangstechnologie RAT1 beginnen kann. Dazu benötigt sie ein virtuelles Referenzmodell des entsprechenden Endgerätes und gegebenenfalls von dessen Subskriptionsdaten. Vorteilhaft ist dabei, dass keine vollständige Information über den Pilotkanal CPC zu übertragen ist. Lediglich solche Informationsgehalte, welche zum Starten einer grundlegenden oder anfänglichen Kommunikation zwingend erforderlich sind, können in einem ersten Schritt übertragen werden. Detailliertere Informationen können dann über eine reguläre Kommunikation übertragen werden, so dass die vollständige Information mit einem sehr großen Informationsgehalt nicht zwingend über den Pilotkanal CPC übertragen werden muss.

Vorzugsweise findet auch eine Informationspriorisierung auf dem Pilotkanal CPC bzw. in den darüber übertragenen Daten i statt. Auf eine besonders effiziente Art und Weise wird die Informationspriorisierung dadurch vorgenommen, dass höher priorisierte Daten, das heißt Datenpakete mit beispielsweise einem höherwertigen Prioritätsindex, häufiger wiederholt übertragen werden als Datenpakete mit einem niedrigeren Prioritätsindex. Eine Priorität kann anhand verschiedener Kriterien festgelegt werden. insbesondere kann die Priorität auf einem Vertrag bzw. einer Bezahlung eines Funksystem-Anbieters beruhen. So kann eine Information hinsichtlich einer Zugriffsmöglichkeit auf Ressourcen eines Netzbetreibers, welcher mehr bezahlt hat bzw. höher priorisiert ist, öfter gesendet werden, als eine entsprechende Information eines anderen Netzbetreibers. Eine höhere Priorisierung können auch grundlegende Dienste und Daten im Vergleich zu für einen Erstzugriff weniger wichtigen Diensten und Daten erhalten. Im Fall einer Priorisierung von Diensten können Dienste höher priorisiert werden, welche eine frühe Kommunikation ermöglichen. Spezifische Informationen, welche für nur eine geringe Anzahl von Endgeräten MS, MS* erforderlich sind und daher weniger oft bzw. weniger häufig zu senden sind, können hingegen mit einer niedrigeren Priorität versehen werden. Auch ein Interaktionslevel zwischen Funksystemen, welche durch Endgeräte bzw. deren Teilnehmer verwendet werden, kann hoch-priorisiert werden im Gegensatz zu Systemen und Ressourcen für eine maschinelle Kommunikation. Im Gegensatz zu einer Maschine wird ein menschlicher Teilnehmer weniger lange bereit sein, auf eine Verbindung zu warten. Falls der Teilnehmer bzw. das Endgerät Bestandteil eines Verkaufsautomaten ist, sind hingegen geringere Priorisierungen als im Fall einer Notfalleinrichtung als einer dazu verschiedenartigen Maschine möglich. Im Rahmen der Priorisierung können Indizes auch so gesetzt werden, dass Ressourcen bzw. Zugriffsmöglichkeiten von Funkzugriffstechnologien mit freien Ressourcen öfters über den Pilotkanal CPC annonciert werden als bereits in hohem Maße verwendete Zugriffsmöglichkeiten.

Vorzugsweise teilen die Endgeräte deren Teilnehmer- bzw. Subskribierungsinformationen direkt der Pilotkanal-Managementstation CMS mit, wozu einfache logische Verbindungen verwendet werden können.

Gemäß einer bevorzugten Ausführungsform kann auch eine Vergebührung durch das Erzeugen und Übermitteln der Vergebührungsinformation bi bereitgestellt werden. Vergebührungsinformationen bi können dabei auf verschiedenartige Anwendungsfälle angewendet werden und für verschiedenartige Vergebührungsverfahren eingesetzt werden.

Wenn gemäß einer ersten Variante ein Teilnehmer bzw. dessen Endgerät MS eine angebotene Pilotkanal-Information verwendet, wird diese Tatsache vorzugsweise dem Betreiber bzw. Anbieter des Pilotkanals CPC angezeigt, so dass dieser eine letztendlich automatisiert erstellte Vergebührung durch seine Steuereinrichtung C veranlassen kann. Wenn ein Teilnehmer bzw. dessen Endgerät MS ein bestimmtes Netz aufgrund einer solchen Pilotkanal-Information auswählt, kann der Betreiber des Pilotkanals CPC vorzugsweise von dem Betreiber des ausgewählten Netzes automatisiert eine Gebühr verlangen. Gattungsfremd ist dies vergleichbar mit dem Anklicken von Werbung auf einer Internetseite, wo dem Betreiber der Seite für jedes Anklicken eine Vergütung gutgeschrieben wird.

Besonders vorteilhaft ist eine Variante, bei welcher auch den Teilnehmern bzw. Endgeräten MS eine Vergütung automatisiert zugewiesen wird. Dies ist vorteilhaft, da auf diese Art und Weise Teilnehmer motiviert werden können, mittels deren Endgeräten MS, MS* vom Pilotkanal CPC vorgegebene Anweisungen auszuführen, um letztendlich vorzugsweise die gesamte Funkumgebung für den Betreiber des Pilotkanals CPC bzw. für dessen Pilotkanal-Managementstation CMS hinsichtlich Zugriffsmöglichkeiten zu prüfen. Dadurch können falsche oder nicht ausgeglichene Funkzugriffe vermieden werden. Außerdem kann die Systemkapazität dadurch erhöht werden.

Besonders bevorzugt ist eine Ausführungsform, bei welcher zusätzliche Informationsgehalte als Bestandteil der Daten i über den Pilotkanal CPC annonciert werden. Solche Informationsgehalte können Informationen über den Betreiber, existierende Roaming-Abkommen, Gebühren, angebotene Dienste, angebotene Dienste-Güten oder Leistungsfähigkeiten sowie Ausnutzungen bzw. Lasten als beispielhaft genannte Informationen sein. Entsprechend überträgt der Pilotkanal CPC nicht nur Informationen bezüglich verfügbarer Funkzugriffstechnologien RAT1, RAT2 sondern darüber hinaus Informationen, welche für den Teilnehmer und/oder dessen Endgerät MS, MS* vorteilhaft sind, um eine Entscheidung zu treffen, welche Technologie verwendet werden soll.

Die verschiedenen einzeln umsetzbaren oder auch in Kombination untereinander umsetzbaren Ausführungsformen und Variationen bieten eine Vielzahl von Vorteilen. Durch eine mittels Informationen von den Endgeräten MS, MS* gemanagte Pilotkanal-Managementstationen CMS können über den Pilotkanal CPC stets aktuelle und gegebenenfalls gefilterte bzw. verarbeitete Informationsgehalte zur effizienten Ausnutzung von Ressourcen und zur Reduzierung eines Übermaßes an Signalisierungen übertragen werden.

Ein solches System ist auch flexibel. Neue Teilnehmer, welche bei einem Betreiber subskribiert sind, können die Struktur der Pilotkanal-Managementstation CMS in Verbindung mit deren Pilotkanal-Sendestation CTX für effiziente Pilotkanal-Zugriffe/Informationsverbreitungen verwenden. In dem selbstorganisierten Pilotkanal CPC wird eine Information angezeigt, wenn ein Teilnehmer eine Tatsache zu der Pilotkanal-Managementstation CMS berichtet hat, wobei möglicherweise komplizierte Vertragsbedingungen zwischen Netzbetreibern und einem Betreiber des Pilotkanals CPC nicht erforderlich sind.

Wenn die selbst-organisierende Eigenschaft eines solchen Pilotkanals CPC ausgenutzt wird, werden Unterschiede zwischen über den Pilotkanal CPC mitgeteilten und tatsächlichen Bedingungen von Zugriffsmöglichkeiten auf Funkzugriffstechnologien RAT1, RAT2 unter Zwischenschaltung von Endgeräten MS, MS* berichtet und die über den Pilotkanal CPC übertragenen Daten i können mit nur geringem zeitlichen Versatz aktualisiert werden.

Neben dem Einsatz von Mobilfunksystemen, wie den beiden beispielhaft skizzierten Funk-Kommunikationssystemen GSM, UMTS, können auch andersartige Funkzugriffstechnologien in ein solches System mit eingebunden werden, wie beispielsweise lokale Funknetze oder funkgestützte Internetzugänge.

Auch hinsichtlich der Endgeräte MS, MS* können verschiedenartigste Typen von Endgeräten eingesetzt werden. Insbesondere eine Messung verfügbarer Ressourcen verschiedenartiger Funkzugriffstechnologien RAT1, RAT2 kann auch von Endgeräten durchgeführt und weiterberichtet werden, welche keine rekonfigurierbare Funkschnittstelle oder zwei oder mehr eigenständige Funkschnittstellen für Zugriffe auf Netzzugänge zu verschiedenen Funkzugriffstechnologien aufweisen. Außerdem müssen derartige Endgeräte MS, MS* nicht zwingend sämtliche theoretisch verfügbare Funkzugriffstechnologien überwachen können, sondern gegebenenfalls nur einzelne oder sogar nur eine einzige verfügbare Funkzugriffstechnologie überwachen können, um das Verfahren zu unterstützen.

## Patentansprüche

1. Verfahren zum Bereitstellen von ersten Daten (i) über einen Pilotkanal (CPC) eines Funk-Kommunikationssystems (GSM), bei dem der Pilotkanal (CPC) mit den Daten (i) Informationsdaten zu verfügbaren Zugriffsmöglichkeiten aussendet,
**dadurch gekennzeichnet, dass**
zum Bereitstellen der ersten Daten (i) von zumindest einem Endgerät (MS, MS*) empfangene zweite Daten (mi) berücksichtigt werden, wobei sich die zweiten Daten (mi) auf für das zumindest eine Endgerät (MS, MS*) verfügbare Zugriffsmöglichkeiten beziehen.

2. Verfahren nach Anspruch 1, bei dem
das zumindest eine Endgerät (MS) Messungen bezüglich der verfügbaren Zugriffsmöglichkeiten durchführt, und Ergebnisse dieser Messungen als die zweiten Daten (mi) aussendet.

3. Verfahren nach Anspruch 1 oder 2, bei dem
das zumindest eine Endgerät (MS) Messungen zu mittels der ersten Daten (i) signalisierten Zugriffsmöglichkeiten durchführt, und Ergebnisse dieser Messungen als die zweiten Daten (mi) aussendet.

4. Verfahren nach einem vorstehenden Anspruch, bei dem zumindest ein Teil der ersten Daten (i) als verschlüsselte Daten (ei) zum entschlüsselbaren Empfangen durch eines oder mehrere Endgeräte (MS) bereitgestellt wird.

5. Verfahren nach einem vorstehenden Anspruch, bei dem zumindest ein Teil der ersten Daten (i) als zertifizierte Daten bereitgestellt wird.

6. Verfahren nach einem vorstehenden Anspruch, bei dem zumindest ein Teil der ersten Daten (i) als gefilterte Daten (fi) bereitgestellt wird.

7. Verfahren nach einem vorstehenden Anspruch, bei dem
die zweiten Daten (mi) eine Endgeräte-Identifizierungsinformation und/oder eine Teilnehmer-Identifizierungsinformation (mi-ID) enthalten und/oder in Verbindung mit den zweiten Daten (mi) eine derartige Endgeräte-Identifizierungsinformation und/oder Teilnehmeridentifizierungsinformation empfangen wird, wobei die Endgeräte-Identifizierungsinformation (mi-ID) bzw. die Teilnehmer-Identifizierungsinformation zusammen mit den zweiten Daten (mi) und/oder einer zugeordneten Vergebührungsinformation (bi) bezogen auf die Endgeräte-Identifizierungsinformation (mi-id) bzw. die Teilnehmer-Identifizierungsinformation verarbeitet und/oder gespeichert werden.

8. Verfahren nach Anspruch 7, wobei
durch das Verarbeiten eine Vergebührung zu Gunsten oder zu Lasten eines dem zumindest einen Endgerät (MS) zugeordneten Kontos ausgelöst wird.

9. Endgerät (MS, MS*) eines Funk-Kommunikationssystems, mit einer Funkschnittstelleneinrichtung zum Empfangen von ersten Daten (i) eines über eine Funkschnittstelle übertragenen Pilotkanals (CPC), und zum Senden von zweiten Daten (mi) bezüglich mittels einer Steuereinrichtung (C) ermittelter verfügbarer Zugriffsmöglichkeiten.

10. Endgerät (MS, MS*) nach Anspruch 10, wobei
die Funkschnittstelleneinrichtung ausgestaltet ist zu Konfiguration für einen Verbindungsaufbau über die Funkschnittstelle abhängig von einer verfügbaren Zugriffsmöglichkeit.

11. Endgerät (MS, MS*) nach Anspruch 9 oder 10, wobei
die Steuereinrichtung (C) Messungen bezüglich der verfügbaren Zugriffsmöglichkeiten (RAT1, RAT2) durchführt, und eine Übertragung von Ergebnissen dieser Messungen als die zweiten Daten (mi) über die Funkschnittstelle (V) an eine netzseitige Netzeinrichtung (CMS) zum Bereitstellen der ersten Daten (i) steuert.

12. Endgerät nach Anspruch 10, wobei
sich die Funkschnittstelleneinrichtung unter Berücksichtigung der ersten Daten (i) rekonfiguriert.

13. Netzseitige Netzeinrichtung (CMS1, CMS2) eines Funk-Kommunikationssystems, mit
einer Steuereinrichtung (C) zum Auswerten von von zumindest einem Endgerät (MS, MS*) empfangenen zweiten Daten (mi) bezüglich für das zumindest eine Endgerät (MS, MS*) verfügbarer Zugriffsmöglichkeiten, und zum Bereitstellen von ersten Daten (i) zur Übertragung über einen Pilotkanal (CPC), wobei mit den ersten Daten (i) Informationsdaten zu verfügbaren Zugriffsmöglichkeiten übertragen werden, welche abhängig von der Auswertung der zweiten Daten (mi) bestimmt werden.

14. Verfahren nach einem der Ansprüche 1 bis 8, Endgerät nach einem der Ansprüche 9 bis 12 bzw. netzseitige Netzeinrichtung nach Anspruch 13, wobei
die ersten Daten (i) und/oder die zweiten Daten (mi) auf physikalische Zugangsparameter (pi) zu zumindest einem Funk-Kommunikationssystem (GSM, UMTS) bezogen sind.

15. Verfahren nach einem der Ansprüche 1 bis 8 oder 14, Endgerät nach einem der Ansprüche 9 bis 12 oder 14 bzw. netzseitige Netzeinrichtung nach Anspruch 13 oder 14, wobei
die ersten Daten Daten (i) und/oder die zweiten Daten (mi) auf aktuelle logische Zugangsparameter (oi) zu zumindest einem Funk-Kommunikationssystem (GSM, UMTS) bezogen sind.

16. Verfahren nach einem der Ansprüche 1 bis 8, 14 oder 15, Endgerät nach einem der Ansprüche 9 bis 12, 14 oder 15 bzw. netzseitige Netzeinrichtung nach Anspruch 13, 14 oder 15, wobei
welches ausgestaltet ist zum Rekonfigurieren einer rekonfigurierbaren Funk-schnittstelleneinrichtung in dem Endgerät (MS, MS*) für einen Verbindungsaufbau gemäß einer ausgewählten Zugriffsmöglichkeit.
